# EUROPÄISCHE PATENTANMELDUNG

(11) **EP 0 878 536 A2**
(43) Veröffentlichungstag der Anmeldung: **18.11.1998**
(21) Anmeldenummer: 98106915.6
(22) Anmeldetag: 16.04.1998
(51) Int. Cl.: C12G 3/06

(54) **Alkoholisches Getränk mit Hanfbestandteilen**

(30) Priorität: 22.04.1997 DE 19716799
(71) Anmelder: TCM GmbH, 83026 Rosenheim (DE)
(72) Erfinder: Krubicza, Silvia, 83125 Eggstätt (DE)
(74) Vertreter: Bauer, Friedrich, Dipl.-Ing.

(57) **Zusammenfassung**

Ein alkholisches Getränk, dessen Hauptbestandteil aus Branntwein oder Met besteht, enthält 2 bis 30 Vol.% aus Hanfblüten gewonnenem und mit Zucker versetztem Hanfsirup und mindestens ein Hanfblatt in ganzer oder grob geschroteter Form.

## Beschreibung

Die Erfindung betrifft ein alkoholisches Getränk, dessen Hauptbestandteil aus Branntwein oder Met besteht.

Es sind in durchsichtige Flaschen abgefüllte, alkoholische Getränke bekannt, in denen aus optischen Gründen besonders auffällige Bestandteile enthalten sind, beispielsweise golden schimmernde Plättchen, die sich insbesondere beim Kippen der Flasche innerhalb der Flüssigkeit bewegen und einen besonderen optischen Effekt verursachen.

Der Erfindung liegt die Aufgabe zugrunde, ein alkoholisches Getränk zu schaffen, das sowohl geschmacklich als auch optisch von bekannten Getränken dieser Art abweicht und dabei einfach und kostengünstig herzustellen ist.

Diese Aufgabe wird erfindungsgemäß durch die Merkmale des Anspruches 1 gelöst. Vorteilhafte Ausführungsformen der Erfindung sind in den weiteren Ansprüchen beschrieben.

Das erfindungsgemäße alkoholische Getränk enthält 2 bis 30 Vol.% Hanfsirup und mindestens ein Hanfblatt in ganzer oder grob geschroteter Form.

Das erfindungsgemäße alkoholische Getränk weist durch die Zugabe von Hanfsirup eine besondere Geschmacksrichtung auf, die es von bisher bekannten Branntwein- oder Metgetränken unterscheidet. Bei Hanfsirup handelt es sich um eine Flüssigkeit, die aus Hanfblüten gewonnen und mit Zucker versetzt wird.

Mit dem Hanfblatt, das jeder das alkoholische Getränk enthaltenden, transparenten Flasche zugegeben wird, wird eine zusätzliche optische Wirkung erzielt, welche das erfindungsgemäße alkoholische Getränk von anderen Getränken dieser Art deutlich hervorhebt.

Anstelle von Branntwein mit einem Alkoholgehalt von 20 bis 50 Vol.% als Hauptbestandteil des alkoholischen Getränks kann auch Met verwendet werden, der üblicherweise einen Alkoholgehalt von 10 bis 12 Vol.% hat.

Für das erfindungsgemäße alkoholische Getränk wird ein sog. Euro-Hanf verwendet, welcher eine Cannabisart darstellt, die nicht die Wirkung eines Rauschmittels hat.

Vorzugsweise hat das Hanfblatt einen mittleren Durchmesser von 2 bis 150 mm. Die Größe des Hanfblattes wird in Abhängigkeit von der Flaschengröße bestimmt, die üblicherweise 0,02 bis 3 l betragen kann.

Vorzugsweise besteht der Hauptbestandteil des alkoholischen Getränkes aus einem Kartoffelbranntwein (Wodka). Alternativ können jedoch auch andere Branntweine, wie beispielsweise Korn- oder Hanfbranntwein, verwendet werden.

Zweckmäßigerweise wird klarer Branntwein verwendet, um das Hanfblatt deutlich erkennen zu können.

Gemäß einer vorteilhaften Ausführungsform der Erfindung weist das alkoholische Getränk folgende Bestandteile auf:
- Kartoffelbranntwein oder Met
- 2 bis 30 Vol.% Hanfsirup
- 1 bis 5 % Hanfextrakt
- 1 bis 5 % Zitrone
- Hanfblatt in ganzer oder geschroteter Form

Der Hanfextrakt, auch Hanfessenz genannt, wird aus den Hanfblättern gewonnen. Mit dem Hanfextrakt kann dem Getränk eine charakteristische grüne Färbung verliehen werden. Die Zitrone wird zweckmäßigerweise in der Form von Zitronensaft zugegeben, kann jedoch auch als Zitronenpulver oder -sirup beigemengt werden. Die Zitrone dient zur weiteren Geschmacksverbesserung.

## Patentansprüche

1. Alkoholisches Getränk, dessen Hauptbestandteil aus Branntwein oder Met besteht, **dadurch gekennzeichnet,** daß das alkoholische Getränk 2 bis 30 Vol.% aus Hanfblüten gewonnenem und mit Zucker versetztem Hanfsirup und mindestens ein Hanfblatt in ganzer oder grob geschroteter Form enthält.

2. Alkoholisches Getränk nach Anspruch 1, **dadurch gekennzeichnet**, daß das Hanfblatt einen mittleren Durchmesser von 2 bis 150 mm hat.

3. Alkoholisches Getränk nach Anspruch 1, **dadurch gekennzeichnet**, daß der Hauptbestandteil des alkoholischen Getränks aus Kartoffelbranntwein besteht.

4. Alkoholisches Getränkt nach einem der vorhergehenden Ansprüche, **dadurch gekennzeichnet**, daß das alkoholische Getränk folgende Bestandteile aufweist:
- Kartoffelbranntwein oder Met
- 2 bis 30 Vol.% Hanfsirup
- 1 bis 5 % aus Hanfblättern gewonnenem Hanfextrakt
- 1 bis 5 % Zitrone
- Hanfblatt in ganzer oder geschroteter Form
